# EUROPÄISCHE PATENTANMELDUNG

(11) **EP 2 998 149 A1**
(43) Veröffentlichungstag der Anmeldung: **23.03.2016**
(21) Anmeldenummer: 14185413.3
(22) Anmeldetag: 18.09.2014
(51) Int. Cl.: B60L 7/10, B60L 15/20, B60L 7/12, B60L 11/18

(54) **Elektrisch betriebenes Fahrzeug**

(71) Anmelder: Glock, Gaston, 9220 Velden (AT)
(72) Erfinder: Glock, Gaston, 9220 Velden (AT)
(74) Vertreter: Patentanwälte Barger, Piso & Partner

(57) **Zusammenfassung**

Die Erfindung betrifft ein Landfahrzeug mit rein elektrischem Antrieb.

Die Erfindung ist dadurch gekennzeichnet, dass für jedes angetriebene Rad ein eigener Radnabenmotor vorgesehen ist, dass alle Radnabenmotoren von einer zentralen, elektronischen Steuereinheit gesteuert werden, und dass dieser zentrale Steuereinheit Zustandsgrößen, wie Stromstärke, elektrische Spannung, Drehzahl jedes der Räder, Ladezustand der Batterie, und dergleichen mehr, die von Sensoren ermittelt und der zentralen Steuereinheit übermittelt werden, zur Steuerung der Radnabenmotoren unter Verwendung von gespeicherten Zustandsprofilen heranzieht, und dass in den Zustandsprofilen die Verknüpfung der Zustandsgrößen mit den Steueraktivitäten gespeichert sind, sodass ohne Verzug gesteuert werden kann.

## Beschreibung

Die Erfindung betrifft ein elektrisch betriebenes Fahrzeug, entsprechend dem Oberbegriff des Anspruches 1.

Elektrofahrzeuge sind verschiedentlich bekannt und weisen gegenüber Kraftfahrzeugen mit Verbrennungskraftmotor verschiedene Vorteile, aber auch verschiedene Nachteile auf. Der Hauptnachteil ist die geringe Energiedichte des Energievorrates, der Batterie. Da diese Energiedichte trotz zahlloser Versuche bisher nicht namhaft gesteigert werden konnte, ist es ein Ziel der Erfindung, das Fahrzeugt mit so wenig toter Masse zu versehen wie möglich um die Gesamtmasse der Batterie erhöhen zu können, ohne dabei die Gesamtmasse des Fahrzeuges ungebührlich gegenüber Fahrzeugen mit Verbrennungskraftmaschine zu erhöhen.

Erfindungsgemäß geschieht dies dadurch, dass der Antrieb in Form von Radnabenmotoren erfolgt, die in bzw. an den einzelnen Rädern vorgesehen sind. Auf diese Weise kann man sämtliche massereiche Kraftstränge vermeiden und erhält ausreichend Raum und ein so geringes Gewicht, dass es durch eine deutlich größere Batterie als bisher möglich, zu einem weitgehenden Ausgleich des Nachteils der geringen Energiedichte kommt.

Dies wird noch gesteigert durch das Vorsehen der Radnabenmotoren in allen Rädern des Fahrzeugs, da dadurch bei den meisten Bremsungen die Bremsenergie nicht über mechanische Bremsen vernichtet (eigentlich in Wärme umgewandelt wird) sondern dazu dient, die Batterie wieder aufzuladen.

Ganz speziell ermöglicht diese Grundidee aber, dass die zentrale Fahrzeugsteuerung eine Vielzahl von Modellen von Fahrzuständen - Zustandsprofile - gespeichert hat, und daher auf den jeweils festgestellten, aktuell vorliegenden, Fahrzustand zielgerichtet reagieren kann.

Dazu ist das Fahrzeug mit den entsprechenden Sensoren versehen, das sind einerseits solche, die für den Betrieb der Motoren notwendig sind und daher jedenfalls vorhanden sein müssen, wie Messgeräte für die Messung der Spannung und der Stromstärke für die einzelnen Motoren, den Ladezustand der Batterie, die Drehzahl der Motoren bzw. der Räder, für das notwendige Antiblockiersystem beim Bremsen, und einiges andere mehr.

Dazu kommen Sensoren für die Messung der Position der einzelnen Räder entlang ihres Federweges, einschließlich des Einschlagwinkels der gelenkten Räder, wie sie auch bei herkömmlichen Fahrzeugen für die so genannte Traktionskontrolle oder Stabilitätskontrolle vorhanden sind. Daraus bzw. aus dem Verlauf dieser Größen kann die zentrale Fahrzeugsteuerung zum Beispiel die beginnende Drift des Fahrzeugs in der Kurve und andere Fahrzustände erkennen. Anders als bei einer normalen Reaktion, wie beispielsweise der Verringerung der Antriebskräfte oder dgl. kann nun durch die zentrale Fahrzeugsteuerung erfindungsgemäß durch die aufgrund von Erfahrung und Tests bestimmten Zustandsprofile gezielt eingegriffen werden, wenn gewünscht und vorgesehen bis hin zur Verstellung der Steifigkeiten der Stoßdämpfer oder der Härte der Federn, wobei durch die kontinuierlich weitergeführte Überwachung aller erfassten Parameter laufend festgestellt werden kann, ob die eigeleiteten Maßnahmen erfolgreich waren oder durch andere Zustandsprofile bzw. die darin angegebenen Reaktion ersetzt werden müssen.

In einer Ausgestaltung kann auch vorgesehen sein, dass als Zustandsgrößen auch die Stellung der einzelnen Räder entlang ihres Federweges und/oder den Einschlagwinkel der gelenkten Räder und/oder das Gesamtgewicht des Fahrzeuges und/oder dessen Geschwindigkeit erfasst werden und mittels entsprechender Zustandsprofile auch die Härte der Stoßdämpfer und/oder die Federcharakteristik Rad für Rad angepasst wird.

Derartige Anpassungen umfassen weiterhin auch, dass diese Zustandsprofile den momentanen Antriebszustand der einzelnen Räder berücksichtigen, ebenso die Geschwindigkeit des Fahrzeugs und, wenn entsprechende Sensoren vorgesehen sind, die Bombierung der Straße und gegebenenfalls deren Breite und das Vorhandensein anderer Fahrzeuge, wenn Abstandsensoren im Fahrzeug eingebaut sind.

In einer weiteren Variante können diese einzelnen Zustandsprofile vom Fahrverhalten des jeweiligen Fahrers abhängig gemacht werden, sie können adaptiv ausgebildet sein und, je nach verwendetem Schlüssel oder Sitzeinstellungen des Fahrersitzes, erkennen welcher der vorgemerkten Fahrer das Fahrzeug betreibt und Rücksicht auf dessen "Lieblingsfahrweise" nehmen.

Die Erfindung ist nicht auf die dargestellten und erläuterten Regelvorgänge und Steuervorgänge beschränkt sondern kann verschiedentlich abgewandelt werden und auch die Art der Bereifung, wegen der Glatteisgefahr die Außentemperatur, die Neigung der Straße in Fahrtrichtung und Vieles mehr berücksichtigen und in die Reaktionen für die einzelnen Zustandsprofile einbauen.

## Patentansprüche

1. Landfahrzeug mit rein elektrischem Antrieb, **dadurch gekennzeichnet, dass** für jedes angetriebene Rad ein eigener Radnabenmotor vorgesehen ist, dass alle Radnabenmotoren von einer zentralen, elektronischen Steuereinheit gesteuert werden, und dass dieser zentrale Steuereinheit Zustandsgrößen, wie Stromstärke, elektrische Spannung, Drehzahl jedes der Räder, Ladezustand der Batterie, und dergleichen mehr, die von Sensoren ermittelt und der zentralen Steuereinheit übermittelt werden, zur Steuerung der Radnabenmotoren unter Verwendung von gespeicherten Zustandsprofilen heranzieht, und dass in den Zustandsprofilen die Verknüpfung der Zustandsgrößen mit den Steueraktivitäten gespeichert sind, sodass ohne Verzug gesteuert werden kann.

2. Landfahrzeug nach Anspruch 1, **dadurch gekennzeichnet, dass** die Zustandsprofile die Anzahl der momentan angetriebenen Räder berücksichtigen.

3. Landfahrzeug nach Anspruch 1 oder 2, **dadurch gekennzeichnet, dass** als Zustandsgrößen auch die Stellung der einzelnen Räder entlang ihres Federweges und/oder den Einschlagwinkel der gelenkten Räder und/oder das Gesamtgewicht des Fahrzeuges und/oder dessen Geschwindigkeit erfasst werden und mittels entsprechender Zustandsprofile auch die Härte der Stoßdämpfer und/oder die Federcharakteristik Rad für Rad angepasst wird.

4. Landfahrzeug nach Anspruch 1 oder 2, **dadurch gekennzeichnet, dass** die Zustandsprofile selbstlernend sind, das heißt, dass durch das jeweilige Fahrverhalten die Zustandsprofile angepasst bzw. adaptiert werden.
